# EUROPEAN PATENT APPLICATION

(11) **EP 4 797 863 A1**
(43) Date of publication of application: **26.08.2026**
(21) Application number: 24878988.5
(22) Date of filing: 15.10.2024
(51) Int. Cl.: H04W 76/18

(54) **METHOD AND APPARATUS FOR COMMUNICATION NODE USED FOR WIRELESS COMMUNICATION**

(30) Priority: 17.10.2023 CN 202311347032
(71) Applicant: Apogee 5G Global, LLC, Plano, TX 75024 (US)
(72) Inventor: YU, Qiaoling, Shanghai 201206 (CN); REN, Nannan, Shanghai 201206 (CN); ZHANG, Xiaobo, Shanghai 201206 (CN)
(74) Representative: Gunzelmann, Rainer
(86) International application number: PCT/CN2024/124914
(87) International publication number: WO 2025/082345

(57) **Abstract**

The present application discloses a method and apparatus for a communication node used for wireless communication. The communication node comprises a first processor. The method comprises: determining that a radio link failure (RLF) has occurred in a first cell; and when it is determined that the RLF has occurred in the first cell, and only when a first condition is met, storing, in a first UE variable, information related to the RLF in the first cell, wherein the first cell is a PCell of the first node; no DAPS is configured for the first node; the AS security of the first node is activated; and the first condition depends on the priority of the first cell. The solution provided in the present application makes the storage and reporting mechanism of RLF-related information more flexible, allows for distinguishing of the priorities of different RLF-related information, and facilitates network optimization based on the RLF-related information.

## Description

### Technical Field

The present application relates to a transmission method and apparatus in a wireless communication system, and in particular to a storage method and apparatus for link failure information.

### Background Art

Self-organizing networks (SON) comprise network self-configuration and self-optimization. To optimize radio link performance, existing 3GPP (the 3rd Generation Partnership Project) protocols support user equipment (UE) in storing information related to a radio link failure (RLF) after the radio link failure and report the stored information related to the radio link failure based on base station scheduling.

With the continuous development of wireless communication, demands have become increasingly diversified. Therefore, in the future evolution, 3GPP will further enhance some key technologies, for example, applying AI (Artificial Intelligence) or ML (Machine Learning) to mobility management to optimize the efficiency of network resource configuration, improve system flexibility, and reduce signaling overhead.

In the existing mechanism for UE to store RLF-related information, when detecting the RLF, the UE only stores information related to the current latest RLF, which is not conducive to network self-configuration and self-optimization when the UE reports the RLF-related information according to existing protocols.

### Summary of the Invention

The inventor has found that when UE detects an RLF and when the UE stores RLF-related information for reporting according to existing protocols, the UE only stores information related to a current latest RLF; that is, if the UE experiences multiple RLFs before a certain RLF information reporting, the UE will only report RLF-related information detected most recently in this RLF reporting. An existing RLF storage mechanism is not conducive to network optimization. Therefore, when the RLF has occurred, how the UE stores the RLF-related information for reporting needs to be studied.

In view of the above problems, the present application provides a solution for storage and reporting of the RLF-related information. In the description of the above problems, an NR system is used as one example. The present application is also applicable to scenarios such as an LTE (Long-Term Evolution) system or an LTE-A (Long-Term Evolution Advanced) system to achieve technical effects similar to those of the NR system; and further, although the present application provides specific implementations for a 3GPP system, the present application can also be used in non-3GPP system scenarios to achieve technical effects similar to those of the 3GPP system. Further, the use of a unified solution for different scenarios also helps to reduce hardware complexity and cost. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, interpretations of terminologies in the present application refer to definitions in the specification protocol TS36 series of 3GPP.

As one embodiment, the interpretations of the terminologies in the present application refer to the definitions in the specification protocol TS38 series of 3GPP.

As one embodiment, the interpretations of the terminologies in the present application refer to the definitions in the specification protocol TS37 series of 3GPP.

It should be noted that, in the absence of conflicts, embodiments and features in the embodiments in any node of the present application may be applied to any other node. In the absence of conflicts, the embodiments and the features in the embodiments of the present application may be arbitrarily combined with each other.

The present application discloses a method for a first node used for wireless communication, characterized by comprising:
determining that a radio link failure has occurred in a first cell; and along with a behavior of determining that the radio link failure has occurred in the first cell, only when a first condition is met, storing, in a first UE variable, information related to the radio link failure in the first cell,
wherein the first cell is a PCell of the first node; no DAPS is configured for the first node; AS security of the first node is activated; and the first condition depends on a priority of the first cell.

As one embodiment, problems to be solved by the present application comprise: how to improve an existing storage and reporting mechanism of RLF information to make storage and reporting of RLF-related information more flexible.

As one embodiment, the problems to be solved by the present application comprise: how to enable a network to collect RLF information in a targeted manner by setting a priority of a cell or RLF-related information.

As one embodiment, characteristics of the above method comprise: the first condition depending on the priority of the first cell.

As one embodiment, benefits of the above method comprise: being conducive to distinguishing between priorities of different RLF-related information.

As one embodiment, the benefits of the above method comprise: being conducive to reporting RLF-related information in a targeted manner by UE.

As one embodiment, the benefits of the above method comprise: being conducive to collecting RLF-related information in a targeted manner by a network.

As one embodiment, the benefits of the above method comprise: being simple to implement based on an existing protocol.

As one embodiment, the benefits of the above method comprise: being conducive to network self-configuration and self-optimization.

According to one aspect of the present application, it is characterized in that the priority of the first cell depends on a type of the radio link failure in the first cell.

As one embodiment, the benefits of the above method comprise: being conducive to reporting different types of RLF-related information by UE.

As one embodiment, the benefits of the above method comprise: being conducive to collecting different types of RLF-related information by a network.

As one embodiment, the benefits of the above method comprise: being conducive to performing network optimization through AI according to RLF-related information by a network.

According to one aspect of the present application, it is characterized in that the priority of the first cell depends on whether a moment when the radio link failure has occurred in the first cell belongs to a first time interval.

As one embodiment, the benefits of the above method comprise: being conducive to improving effectiveness of RLF-related information.

As one embodiment, the benefits of the above method comprise: reducing signaling interaction.

According to one aspect of the present application, it is characterized in that the first condition comprises the priority of the first cell being not lower than a priority of a second cell; and when it is determined that the radio link failure has occurred in the first cell, information related to a radio link failure in the second cell is stored in the first UE variable.

As one embodiment, the benefits of the above method comprise: being conducive to implementing multi-objective optimization by a network.

As one embodiment, the benefits of the above method comprise: being conducive to implementing a more flexible storage and reporting mechanism of RLF-related information by a network.

According to one aspect of the present application, it is characterized in that a first processor receives first signaling, wherein the first signaling indicates the priority of the first cell.

As one embodiment, the benefits of the above method comprise: being conducive to configuring priorities of different RLF information by a network.

According to one aspect of the present application, it is characterized by comprising:
receiving a first RRC message in a first RRC procedure; and sending a second RRC message, wherein the second RRC message comprises a first information block and a second information block, and the first information block indicates that available related information exists in the first UE variable,
wherein the second RRC message is used for confirming that the first RRC procedure is successfully completed; and the second information block indicates whether the information related to the radio link failure stored in the first UE variable is up-to-date.

As one embodiment, the benefits of the above method comprise: being conducive to reporting RLF-related information.

The present application discloses a method for a second node used for wireless communication, characterized by comprising:
sending a first RRC message in a first RRC procedure; and
receiving a second RRC message, wherein the second RRC message comprises a first information block and a second information block,
wherein the first information block indicates that available related information exists in a first UE variable; the second RRC message is used for confirming that the first RRC procedure is successfully completed; the second information block indicates whether information related to a radio link failure stored in the first UE variable is up-to-date; a recipient of the first RRC message determines that the radio link failure has occurred in a first cell; along with the recipient of the first RRC message determining that the radio link failure has occurred in the first cell, only when a first condition is met, the recipient of the first RRC message stores, in the first UE variable, the information related to the radio link failure in the first cell; the first cell is a PCell of the recipient of the first RRC message; no DAPS is configured for the recipient of the first RRC message; AS security of the recipient of the first RRC message is activated; and the first condition depends on a priority of the first cell.

According to one aspect of the present application, it is characterized in that the priority of the first cell depends on a type of the radio link failure in the first cell.

According to one aspect of the present application, it is characterized in that the priority of the first cell depends on whether a moment when the radio link failure has occurred in the first cell belongs to a first time interval.

According to one aspect of the present application, it is characterized in that the first condition comprises the priority of the first cell being not lower than a priority of a second cell; and when it is determined that the radio link failure has occurred in the first cell, information related to a radio link failure in the second cell is stored in the first UE variable.

According to one aspect of the present application, it is characterized by sending first signaling, wherein the first signaling indicates the priority of the first cell.

The present application discloses a first node used for wireless communication, characterized by comprising:
a first processor determining that a radio link failure has occurred in a first cell; and along with a behavior of determining that the radio link failure has occurred in the first cell, only when a first condition is met, storing, in a first UE variable, information related to the radio link failure in the first cell,
wherein the first cell is a PCell of the first node; no DAPS is configured for the first node; AS security of the first node is activated; and the first condition depends on a priority of the first cell.

The present application discloses a second node used for wireless communication, characterized by comprising:
a second transmitter sending a first RRC message in a first RRC procedure; and
a second receiver receiving a second RRC message, wherein the second RRC message comprises a first information block and a second information block,
wherein the first information block indicates that available related information exists in a first UE variable; the second RRC message is used for confirming that the first RRC procedure is successfully completed; the second information block indicates whether information related to a radio link failure stored in the first UE variable is up-to-date; a recipient of the first RRC message determines that the radio link failure has occurred in a first cell; along with the recipient of the first RRC message determining that the radio link failure has occurred in the first cell, only when a first condition is met, the recipient of the first RRC message stores, in the first UE variable, the information related to the radio link failure in the first cell; the first cell is a PCell of the recipient of the first RRC message; no DAPS is configured for the recipient of the first RRC message; AS security of the recipient of the first RRC message is activated; and the first condition depends on a priority of the first cell.

As one embodiment, compared with a traditional solution, the present application has the following advantages:
- . being conducive to making a storage and reporting mechanism of RLF-related information more flexible;
- . being conducive to distinguishing between priorities of different RLF-related information;
- . being conducive to improving effectiveness of the RLF-related information;
- . being conducive to reporting different types of RLF-related information.
- . being conducive to performing network optimization through AI according to the RLF-related information by a network;
- . being conducive to reducing signaling interaction; and
- . being conducive to network self-configuration and self-optimization.

### Brief Description of the Drawings

Other features, purposes and advantages of the present application will become more apparent by reading the detailed description of the non-limiting embodiments in the following drawings with reference to them:
FIG. 1 shows a flowchart of storage and reporting of RLF-related information according to one embodiment of the present application;
FIG. 2 illustrates a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of a priority of a first cell depending on a type of a radio link failure in the first cell according to one embodiment of the present application;
FIG. 7 shows a schematic diagram of a priority of a first cell depending on whether a moment when a radio link failure has occurred in the first cell belongs to a first time interval according to one embodiment of the present application;
FIG. 8 shows a schematic diagram of a first condition comprising a priority of a first cell being not lower than a priority of a second cell according to one embodiment of the present application;
FIG. 9 shows a structural block diagram of a processing apparatus used in a first node according to one embodiment of the present application;
FIG. 10 shows a structural block diagram of a processing apparatus used in a second node according to one embodiment of the present application;
FIG. 11 shows a schematic diagram of an artificial intelligence processing system according to one embodiment of the present application; and
FIG. 12 shows a schematic diagram of an artificial intelligence processing system according to another embodiment of the present application.

### Detailed Description of Embodiments

The technical solutions of the present application will be further described in detail below in conjunction with the drawings. It should be noted that, in the absence of conflicts, embodiments and features in the embodiments in the present application can be arbitrarily combined with each other.

### Embodiment 1

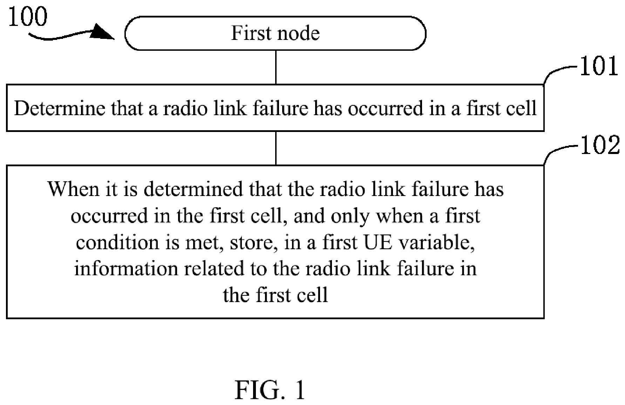

Embodiment 1 illustrates a flowchart of storage and reporting of RLF-related information according to one embodiment of the present application, as shown in FIG. 1. In FIG. 1, each block represents one step. It is particularly emphasized that the order of various blocks in the figure does not represent the temporal relationship between the steps represented.

In Embodiment 1, a first node in the present application, in step 101, determines that a radio link failure has occurred in a first cell; and in step 102, along with a behavior of determining that the radio link failure has occurred in the first cell, only when a first condition is met, stores, in a first UE variable, information related to the radio link failure in the first cell, wherein the first cell is a PCell of the first node; no DAPS is configured for the first node; AS security of the first node is activated; and the first condition depends on a priority of the first cell.

As one embodiment, when the first node determines that the radio link failure has occurred in the first cell, the first node is in an RRC_CONNECTED state.

As one embodiment, the radio link failure is a radio link failure (RLF).

As one embodiment, the behavior of determining that the radio link failure has occurred in the first cell means: considering that the radio link failure is detected in the first cell.

As one embodiment, the behavior of determining that the radio link failure has occurred in the first cell means: considering that the radio link failure is detected in a cell group to which the first cell belongs.

As one embodiment, the radio link failure is a handover failure (HOF); and the first cell is a source cell.

As one embodiment, the handover failure is a mobility from NR failure.

As one embodiment, the handover is not DAPS handover.

As one embodiment, the handover is not DAPS handover.

As one embodiment, the behavior of determining that the radio link failure has occurred in the first cell means: determining a reconfiguration with sync failure.

As one embodiment, T304 expires; and when the T304 expires, it is determined that the radio link failure has occurred in the first cell.

As one sub-embodiment of the above embodiment, the T304 is configured to the first cell.

As one sub-embodiment of the above embodiment, the T304 is configured to an MCG; and the MCG comprises the first cell.

As one sub-embodiment of the above embodiment, the T304 is not started by executing cell selection during running of T311.

As one sub-embodiment of the above embodiment, the first cell is a source cell.

As one embodiment, T310 in the first cell expires; and when the T310 in the first cell expires, it is determined that the radio link failure has occurred in the first cell.

As one embodiment, T312 in the first cell expires; and when the T312 in the first cell expires, it is determined that the radio link failure has occurred in the first cell.

As one embodiment, when the first node does not perform a small data transmission (SDT) procedure, T300, T301, T304, the T311 and T319 of the first cell are all not running, and MAC of the first cell sends a random access problem indication, it is determined that the radio link failure has occurred in the first cell.

As one embodiment, when the first node does not perform the small data transmission procedure, and RLC of the first cell indicates that an upper limit of the number of retransmissions has been reached, it is determined that the radio link failure has occurred in the first cell.

As one embodiment, the phrase of along with the behavior of determining that the radio link failure has occurred in the first cell means: when it is determined that the radio link failure has occurred in the first cell.

As one embodiment, the phrase of along with the behavior of determining that the radio link failure has occurred in the first cell means: triggered by the behavior of determining that the radio link failure has occurred in the first cell.

As one embodiment, the phrase of along with the behavior of determining that the radio link failure has occurred in the first cell means: in response to the behavior of determining that the radio link failure has occurred in the first cell.

As one embodiment, the first UE variable is one VarRLF-Report.

As one embodiment, the first UE variable is one VarRLF-Report-r16.

As one embodiment, the first UE variable is one VarRLF-Report-r18.

As one embodiment, the first UE variable is one VarRLF-Report-r19.

As one embodiment, the first condition is pre-configured.

As one sub-embodiment of the above embodiment, the first condition is configured by a network.

As one sub-embodiment of the above embodiment, the first condition is configured by an AI module.

As one embodiment, the first condition is predefined.

As one embodiment, the first condition is determined by UE.

As one embodiment, the first condition depends on the AI module (for AI Model).

As one embodiment, the first condition depends on AI module data set training.

As one embodiment, the first condition depends on AI module data collection.

As one embodiment, the first condition is for AI module updating.

As one embodiment, the first condition is for network optimization.

As one embodiment, the first condition is related to the priority of the first cell.

As one embodiment, the first condition is related to content of the information related to the radio link failure in the first cell.

As one embodiment, the first condition is related to whether the stored information related to the radio link failure exists in the first UE variable.

As one embodiment, the first condition is related to content of the stored information related to the radio link failure in the first UE variable.

As one embodiment, the first condition is related to a priority of the stored information related to the radio link failure in the first UE variable.

As one embodiment, the phrase of storing, in the first UE variable, the information related to the radio link failure in the first cell means: determining content in the first UE variable.

As one embodiment, the phrase of storing, in the first UE variable, the information related to the radio link failure in the first cell means: setting at least one field in the first UE variable, wherein the at least one field indicates the information related to the radio link failure in the first cell.

As one sub-embodiment of the above embodiment, the at least one field belongs to one RLF-Report.

As one sub-embodiment of the above embodiment, the at least one field belongs to one RLF-Report-r16.

As one sub-embodiment of the above embodiment, the at least one field belongs to one RLF-Report-r19.

As one embodiment, the phrase of storing, in the first UE variable, the information related to the radio link failure in the first cell comprises: storing priority information of the first cell in the first UE variable.

As one embodiment, the phrase of storing, in the first UE variable, the information related to the radio link failure in the first cell means: storing, in the first UE variable, information related to the first node when the radio link failure has occurred in the first cell.

As one embodiment, the phrase of storing, in the first UE variable, the information related to the radio link failure in the first cell comprises: storing, in the first UE variable, a PLMN or EPLMN or RPLMN of the first node when the radio link failure has occurred in the first cell.

As one embodiment, the phrase of the first cell being the PCell of the first node means: the first node performs an initial access procedure on the first cell.

As one embodiment, the phrase of the first cell being the PCell of the first node means: the first node performs RRC communication on the first cell.

As one embodiment, the phrase of the first cell being the PCell of the first node means: the first cell is a primary cell of the first node.

As one embodiment, when it is determined that the radio link failure has occurred in the first cell, the first cell is a primary cell of the first node.

As one embodiment, the phrase that no DAPS is configured for the first node means: the first node is not configured with any DAPS bearer.

As one embodiment, the phrase that no DAPS is configured for the first node means: any bearer of the first node is not indicated with daps.

As one embodiment, when it is determined that the radio link failure has occurred in the first cell, no DAPS is configured for the first node.

As one embodiment, the phrase of the AS security of the first node being activated means: the first node considers that the AS security is activated.

As one embodiment, the phrase of the AS security of the first node being activated means: AS security has been activated for the first node.

As one embodiment, in response to receiving one SecurityModeCommand message, the AS security of the first node is activated.

As one embodiment, from the AS security of the first node being activated to determining that the radio link failure has occurred in the first cell, the AS security is not deactivated.

As one embodiment, the priority is divided into two types: a high priority and a low priority.

As one embodiment, the priority is divided into two or more enumeration type values.

As one embodiment, the priority is one integer.

As one embodiment, the priority is one non-negative integer.

As one embodiment, the priority is one positive integer.

As one embodiment, the priority is one multi-term weighted sum.

As one embodiment, the priority is one multi-term weighted average value.

As one embodiment, a larger value of the priority represents a higher priority.

As one embodiment, a smaller value of the priority represents a higher priority.

As one embodiment, the priority does not change over time.

As one embodiment, the priority changes over time.

As one embodiment, the priority is one function value having a time parameter.

As one embodiment, a calculation function of the priority is predefined.

As one embodiment, the calculation function of the priority is pre-configured.

As one sub-embodiment of the above embodiment, the calculation function of the priority is configured by a network.

As one sub-embodiment of the above embodiment, the calculation function of the priority is configured by an AI module.

As one embodiment, the calculation function of the priority is determined by UE.

As one embodiment, part of parameters of the calculation function of the priority are pre-configured.

As one sub-embodiment of the above embodiment, the part of parameters of the calculation function of the priority are configured by a network.

As one sub-embodiment of the above embodiment, the part of parameters of the calculation function of the priority are configured by an AI module.

As one embodiment, part of parameters of the calculation function of the priority are determined by UE.

As one embodiment, at least part of parameters of the calculation function of the priority are sub-fields in the first UE variable.

As one embodiment, the priority of the first cell means a priority of the first cell when the radio link failure has occurred in the first cell of the first node.

As one embodiment, the priority of the first cell means a priority of this radio link failure when the first node undergoes the radio link failure in the first cell.

As one embodiment, the priority of the first cell means a priority of information related to this radio link failure when the first node undergoes the radio link failure in the first cell.

As one embodiment, the priority of the first cell means a priority of information related to this radio link failure stored in the first UE variable when the first node undergoes the radio link failure in the first cell.

As one embodiment, the phrase of the first condition depending on the priority of the first cell means: the first condition is met only when the priority of the first cell is a high priority.

As one embodiment, the phrase of the first condition depending on the priority of the first cell means: the first condition is met when at least the priority of the first cell is a high priority.

As one embodiment, the phrase of the first condition depending on the priority of the first cell means: the first condition is met only when the priority of the first cell is higher than a priority of a second cell.

As one embodiment, the phrase of the first condition depending on the priority of the first cell means: the first condition is met when at least the priority of the first cell is higher than the priority of the second cell.

As one embodiment, the phrase of the first condition depending on the priority of the first cell means: the first condition is met only when the priority of the first cell is higher than a first threshold.

As one embodiment, the phrase of the first condition depending on the priority of the first cell means: the first condition is met when at least the priority of the first cell is higher than the first threshold.

As one embodiment, the first threshold is pre-configured.

As one embodiment, the first threshold is pre-configured.

As one sub-embodiment of the above embodiment, the first threshold is configured by a network.

As one sub-embodiment of the above embodiment, the first threshold is configured by an AI module.

As one embodiment, the first threshold is predefined.

As one embodiment, the first threshold is determined by UE.

### Embodiment 2

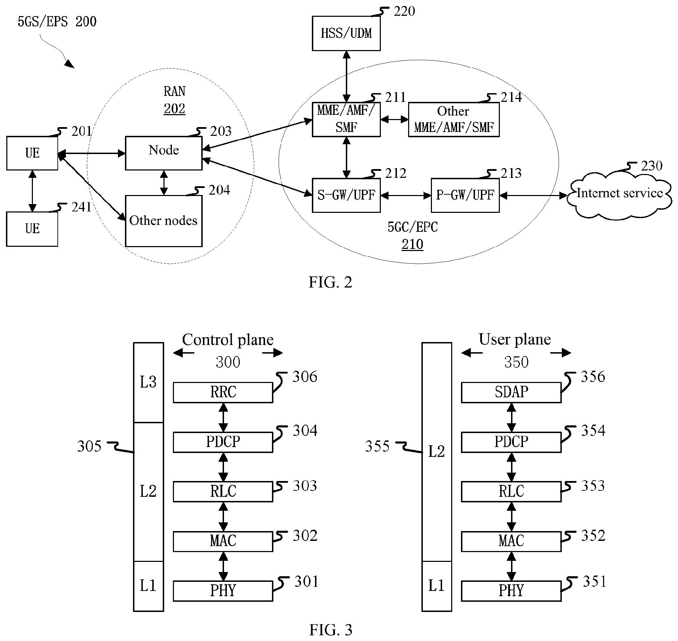

Embodiment 2 illustrates a schematic diagram of a network architecture according to one embodiment of the present application, as shown in FIG. 2. FIG. 2 illustrates a network architecture 200 of a 5G NR (New Radio)/LTE (Long-Term Evolution)/LTE-A (Long-Term Evolution Advanced) system. The 5G NR/LTE/LTE-A network architecture 200 may be referred to as 5GS (5G System)/EPS (Evolved Packet System) 200 or some other suitable terminologies. The 5GS/EPS 200 comprises at least one of UE (User Equipment) 201, an RAN (Radio Access Network) 202, a 5GC (5G Core Network)/EPC (Evolved Packet Core) 210, an HSS (Home Subscriber Server)/UDM (Unified Data Management) 220, and an Internet Service 230. The 5GS/EPS may be interconnected with other access networks, but these entities/interfaces are not shown for simplicity. As shown in the figure, the 5GS/EPS provides packet switching services, but those skilled in the art will readily understand that various concepts presented throughout the present application may be extended to networks that provide circuit switching services or other cellular networks. The RAN comprises a node 203 and other nodes 204. The node 203 provides user and control plane protocol termination towards the UE201. The node 203 may be connected to the other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land transportation vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 is itself connected to the P-GW/UPF213. The P-GW provides UE IP address assignment and other functions. The P-GW/UPF213 is connected to the Internet service 230. The Internet service 230 comprises an Internet protocol service corresponding to an operator, and may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation (BS) device.

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports transmission in a non-terrestrial network (NTN).

As one embodiment, the user equipment supports transmission in a terrestrial network.

As one embodiment, the user equipment supports dual connection (DC) transmission.

As one embodiment, the user equipment comprises an aircraft.

As one embodiment, the user equipment comprises a vehicle terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports low-delay and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT (Mobile Termination).

As one embodiment, the base station device supports transmission in a non-terrestrial network.

As one embodiment, the base station device supports transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises a gateway device.

As one embodiment, the relay device comprises user equipment.

As one embodiment, the relay device comprises a base station device.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. A Layer 2 (L2 layer) 305 is above the PHY301, and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer packets, retransmission of lost data packets, and reordering of data packets to compensate for unordered reception caused by an HARQ (Hybrid Automatic Repeat Request). The MAC sublayer 302 provides multiplexing between logical and transport channels. The MAC sublayer 302 is also responsible for assigning various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers by using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first UE variable in the present application is set in an RRC306.

As one embodiment, the first UE variable in the present application is set in a MAC302 or a MAC352.

As one embodiment, a first information block in the first UE variable in the present application is set in the RRC306.

As one embodiment, the first information block in the first UE variable in the present application is set in the MAC302 or the MAC352.

As one embodiment, a second information block in the first UE variable in the present application is set in the RRC306.

As one embodiment, the second information block in the first UE variable in the present application is set in the MAC302 or the MAC352.

As one embodiment, first signaling in the present application is generated in the RRC306.

As one embodiment, the first signaling in the present application is generated in the MAC302 or the MAC352.

As one embodiment, a first RRC message in the present application is generated in the RRC306.

As one embodiment, the first RRC message in the present application is generated in the MAC302 or the MAC352.

As one embodiment, a second RRC message in the present application is generated in the RRC306.

As one embodiment, the second RRC message in the present application is generated in the MAC302 or the MAC352.

### Embodiment 4

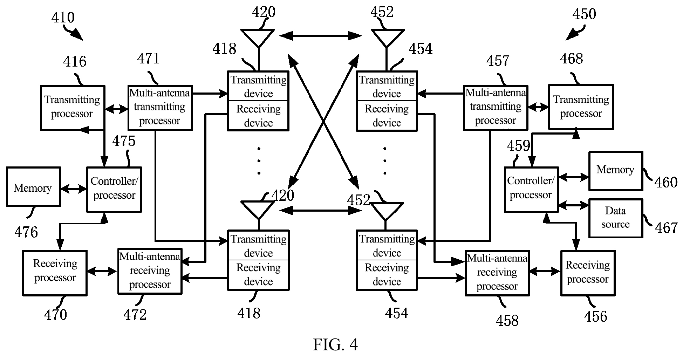

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource assignment to the first communication device 450 based on various priority metrics. The controller/processor 475 is also responsible for the retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and a soft decision is generated. The receiving processor 456 then decodes and deinterleaves the soft decision to recover upper-layer data and control signals transmitted by the second communication device 410 on the physical channel. The upper-layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the data source 467 is used for providing the upper-layer data packet to the controller/processor 459. The data source 467 represents all protocol layers above the L2 layer. Similar to a sending function at the second communication device 410 as described in the transmission from the second communication device 410 to the first communication device 450, the controller/processor 459 implements header compression, encryption, packet segmentation and reordering, and multiplexing between logical and transport channels based on radio resource assignment, and implements the function of the L2 layer for the user plane and the control plane. The controller/processor 459 is also responsible for retransmission of lost packets and signaling to the second communication device 410. The transmitting processor 468 executes modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the first communication device 450 to the second communication device 410, the function at the second communication device 410 is similar to a receiving function at the first communication device 450 as described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 can be provided to the core network.

As one embodiment, the first communication device 450 comprises: at least one processor and at least one memory, the at least one memory comprising computer program code; and the at least one memory and the computer program code are configured to be used together with the at least one processor, and the first communication device 450 at least: determines that a radio link failure has occurred in a first cell; and along with a behavior of determining that the radio link failure has occurred in the first cell, only when a first condition is met, stores, in a first UE variable, information related to the radio link failure in the first cell, wherein the first cell is a PCell of a first node; no DAPS is configured for the first node; AS security of the first node is activated; and the first condition depends on a priority of the first cell.

As one embodiment, the first communication device 450 comprises: a memory storing a computer-readable instruction program, wherein the computer-readable instruction program generates an action when executed by at least one processor, and the action comprises: determining that the radio link failure has occurred in the first cell; and along with the behavior of determining that the radio link failure has occurred in the first cell, only when the first condition is met, storing, in the first UE variable, the information related to the radio link failure in the first cell, wherein the first cell is the PCell of the first node; no DAPS is configured for the first node; the AS security of the first node is activated; and the first condition depends on the priority of the first cell.

As one embodiment, the second communication device 410 comprises: at least one processor and at least one memory, the at least one memory comprising computer program code; and the at least one memory and the computer program code being configured to be used together with the at least one processor. The second communication device 410 at least: sends a first RRC message in a first RRC procedure; and receives a second RRC message, wherein the second RRC message comprises a first information block and a second information block, wherein the first information block indicates that available related information exists in the first UE variable; the second RRC message is used for confirming that the first RRC procedure is successfully completed; the second information block indicates whether information related to the radio link failure stored in the first UE variable is up-to-date; a recipient of the first RRC message determines that the radio link failure has occurred in the first cell; along with the recipient of the first RRC message determining that the radio link failure has occurred in the first cell, only when the first condition is met, the recipient of the first RRC message stores, in the first UE variable, the information related to the radio link failure in the first cell; the first cell is a PCell of the recipient of the first RRC message; no DAPS is configured for the recipient of the first RRC message; AS security of the recipient of the first RRC message is activated; and the first condition depends on the priority of the first cell.

As an embodiment, the second communication device 410 comprises: a memory storing a computer-readable instruction program, wherein the computer-readable instruction program generates an action when executed by at least one processor, and the action comprises: sending the first RRC message in the first RRC procedure; and receiving the second RRC message, wherein the second RRC message comprises the first information block and the second information block, wherein the first information block indicates that available related information exists in the first UE variable; the second RRC message is used for confirming that the first RRC procedure is successfully completed; the first information block indicates that available related information exists in the first UE variable; the second RRC message is used for confirming that the first RRC procedure is successfully completed; the second information block indicates whether information related to the radio link failure stored in the first UE variable is up-to-date; the recipient of the first RRC message determines that the radio link failure has occurred in the first cell; along with the recipient of the first RRC message determining that the radio link failure has occurred in the first cell, only when the first condition is met, the recipient of the first RRC message stores, in the first UE variable, the information related to the radio link failure in the first cell; the first cell is the PCell of the recipient of the first RRC message; no DAPS is configured for the recipient of the first RRC message; the AS security of the recipient of the first RRC message is activated; and the first condition depends on the priority of the first cell.

As one embodiment, at least one of the antenna 452, the receiving device 454, the receiving processor 456, and the controller/processor 459 is used for receiving first signaling.

As one embodiment, at least one of the antenna 420, the transmitting device 418, the transmitting processor 416, and the controller/processor 475 is used for sending the first signaling.

As one embodiment, at least one of the antenna 452, the receiving device 454, the receiving processor 456, and the controller/processor 459 is used for receiving the first RRC message.

As one embodiment, at least one of the antenna 420, the transmitting device 418, the transmitting processor 416, and the controller/processor 475 is used for sending the first RRC message.

As one embodiment, at least one of the antenna 452, the transmitting device 454, the transmitting processor 468, and the controller/processor 459 is used for sending the second RRC message.

As one embodiment, at least one of the antenna 420, the receiving device 418, the receiving processor 470, and the controller/processor 475 is used for receiving the second RRC message.

As one embodiment, the first communication device 450 corresponds to the first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

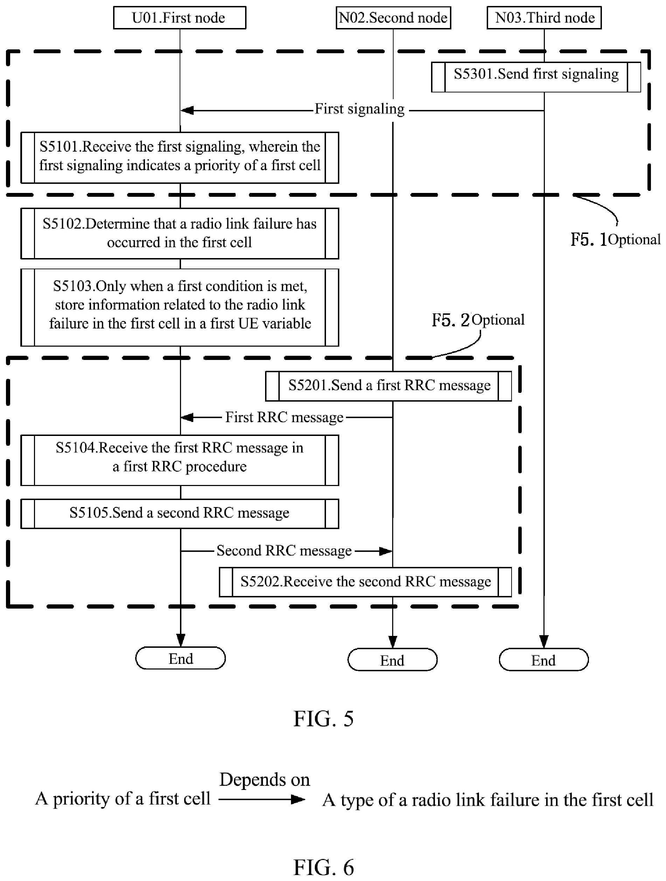

Embodiment 5 illustrates a flowchart of wireless signal transmission according to one embodiment of the present application, as shown in FIG. 5. It is particularly noted that the order in this example does not limit the signal transmission order and implementation order in the present application.

For **a first node U01**, in step S5101, first signaling is received, wherein the first signaling indicates a priority of a first cell; in step S5102, it is determined that a radio link failure has occurred in the first cell; in step S5103, along with a behavior of determining that the radio link failure has occurred in the first cell, only when a first condition is met, information related to the radio link failure in the first cell is stored in a first UE variable; in step S5104, a first RRC message is received in a first RRC procedure; and in step S5105, a second RRC message is sent.

For **a second node N02**, in step S5201, the first RRC message is sent; and in step S5202, the second RRC message is received.

For **a third node N03**, in step S5301, the first signaling is sent.

In Embodiment 5, the first cell is a PCell of the first node; no DAPS is configured for the first node; AS security of the first node is activated; the first condition depends on the priority of the first cell; the second RRC message comprises a first information block and a second information block, and the first information block indicates that available related information exists in the first UE variable; the second RRC message is used for confirming that the first RRC procedure is successfully completed; and the second information block indicates whether the information related to the radio link failure stored in the first UE variable is up-to-date.

As one embodiment, a dotted block F5.1 is optional.

As one embodiment, the dotted block F5.1 exists.

As one embodiment, the dotted block F5.1 does not exist.

As one embodiment, a dotted block F5.2 is optional.

As one embodiment, the dotted block F5.2 exists.

As one embodiment, the dotted block F5.2 does not exist.

As one embodiment, the first node U01 and the second node N02 are connected in a wireless mode.

As one embodiment, the first node U01 and the second node N02 are connected in a wired mode.

As one embodiment, the first node U01 and the second node N02 are connected through a Uu interface.

As one embodiment, the first node U01 and the second node N02 are connected through an IAB interface.

As one embodiment, the first node U01 and the second node N02 are connected through a PC5 interface.

As one embodiment, the third node N03 and the second node N02 are connected through a wireless interface.

As one embodiment, the third node N03 and the second node N02 are connected through a wired interface.

As one embodiment, the third node N03 and the second node N02 are connected through an Xn interface.

As one embodiment, the third node N03 and the second node N02 are connected through an X2 interface.

As one embodiment, the third node N03 and the second node N02 are connected through an F1 interface.

As one embodiment, backhaul between the third node N03 and the second node N02 is ideal.

As one embodiment, backhaul between the third node N03 and the second node N02 is non-ideal.

As one embodiment, the third node N03 is the second node N02.

As one embodiment, the third node N03 is not the second node N02.

As one embodiment, the third node N03 belongs to the second node N02.

As one embodiment, the third node N03 does not belong to the second node N02.

As one embodiment, the third node N03 is one node other than the second node N02.

As one embodiment, the first signaling belongs to one RRC message.

As one embodiment, the first signaling belongs to one RRCRelease message.

As one embodiment, the first signaling belongs to one MAC CE.

As one embodiment, the first signaling belongs to one SIB1 message.

As one embodiment, the first signaling explicitly indicates the priority of the first cell.

As one embodiment, the first signaling implicitly indicates the priority of the first cell.

As one embodiment, the smaller a value of the first signaling, the higher the priority of the first cell.

As one embodiment, the larger the value of the first signaling, the higher the priority of the first cell.

As one embodiment, the first signaling indicates a type of the first cell, and the type of the first cell indicates the priority of the first cell.

As one embodiment, if the first signaling indicates that the first cell belongs to a first cell group, the priority of the first cell is a high priority.

As one embodiment, if the first signaling indicates that the first cell belongs to the first cell group, the priority of the first cell has a highest priority.

As one embodiment, the first signaling indicates the first cell group.

As one embodiment, the first cell group is configured for AI data set collection.

As one embodiment, the first cell group is configured for network optimization.

As one embodiment, the first cell group is configured for a coverage hole.

As one embodiment, the first cell group comprises at least one cell.

As one embodiment, the first cell group comprises at least one cell in a tracking area.

As one embodiment, the first cell group comprises at least one cell in a PLMN.

As one embodiment, the first cell group comprises at least one cell in an AI region.

As one embodiment, if the first signaling configures a first identifier for the first cell, the priority of the first cell is a high priority.

As one embodiment, the first identifier is one NCGI (NR Cell Global Identifier).

As one embodiment, the first identifier is one PLMN ID.

As one embodiment, the first identifier is one NCI (NR Cell Identity).

As one embodiment, the first identifier is one gNB ID.

As one embodiment, the first identifier is one CID (Cell Identity).

As one embodiment, the first identifier is one TAC (Tracking Area Code).

As one embodiment, the first identifier is one group of TACs.

As one embodiment, the first identifier is one TAI (Tracking Area Identifier).

As one embodiment, the first identifier is one group of TAIs.

As one embodiment, the first identifier is one RNA (RAN Notification Area).

As one embodiment, the first identifier is one group of RNAs.

As one embodiment, the first identifier is RAN-NotificationAreaInfo.

As one embodiment, the first identifier is one AI model ID.

As one embodiment, the first identifier is configured for AI mobility.

As one embodiment, the first identifier is configured for AI module data set collection or AI module training.

As one sub-embodiment of the above embodiment, the AI module is located on a UE side.

As one sub-embodiment of the above embodiment, the AI module is located on a network side.

As one sub-embodiment of the above embodiment, the AI module is located in an RAN.

As one sub-embodiment of the above embodiment, the AI module is located in a core network.

As one embodiment, the first signaling indicates priorities of a plurality of cells, and the first cell is one cell in the plurality of cells.

As one embodiment, the first signaling indicates a plurality of cells or features of a plurality of cells, and the first cell is one cell in the plurality of cells.

As one sub-embodiment of the above embodiment, determination by the first node of the priorities of the plurality of cells comprising the first cell depends on a prior configuration and the first signaling.

As one sub-embodiment of the above embodiment, the first node determines the priorities of the plurality of cells comprising the first cell according to at least the prior configuration and the first signaling.

As one sub-embodiment of the above embodiment, the first node determines the priorities of the plurality of cells comprising the first cell only according to the prior configuration and the first signaling.

As one sub-embodiment of the above embodiment, the plurality of cells comprise a second cell.

As one embodiment, the first signaling indicates the priority of the first cell and a priority of the second cell.

As one embodiment, the priority of the first cell is related to a function value of a first function.

As one embodiment, the priority of the first cell is the function value of the first function.

As one embodiment, the priority of the first cell depends on the function value of the first function.

As one embodiment, the first signaling indicating the priority of the first cell means: the first signaling indicates part of parameters of the first function.

As one embodiment, the first signaling indicating the priority of the first cell means: the first signaling indicates the first function.

As one embodiment, parameters of the first function comprise time.

As one embodiment, the parameters of the first function comprise a value of one timer.

As one embodiment, the function value of the first function changes over time.

As one embodiment, the part of parameters of the first function indicated by the first signaling affect a function type of the first function.

As one embodiment, the part of parameters of the first function indicated by the first signaling affect an initial value of the first function.

As one embodiment, the part of parameters of the first function indicated by the first signaling affect a change rate of the first function over time.

As one embodiment, the priority of the second cell is related to a function value of a second function.

As one embodiment, the priority of the second cell is the function value of the second function.

As one embodiment, the priority of the second cell depends on the function value of the second function.

As one embodiment, the first signaling indicating the priority of the second cell means: the first signaling indicates part of parameters of the second function.

As one embodiment, the first signaling indicating the priority of the second cell means: the first signaling indicates the second function.

As one embodiment, parameters of the second function comprise time.

As one embodiment, the parameters of the second function comprise a value of one timer.

As one embodiment, the function value of the second function changes over time.

As one embodiment, the part of parameters of the second function indicated by the first signaling affect a function type of the second function.

As one embodiment, the part of parameters of the second function indicated by the first signaling affect an initial value of the second function.

As one embodiment, the part of parameters of the second function indicated by the first signaling affect a change rate of the second function over time.

As one embodiment, the first function and the second function are the same.

As one embodiment, the first function and the second function are the same in form.

As one embodiment, the first function and the second function are the same in format.

As one embodiment, the first function and the second function are different.

As one embodiment, the first RRC procedure means an RRC Setup procedure.

As one embodiment, the first RRC procedure means an RRC Reconfiguration procedure.

As one embodiment, the first RRC procedure means an RRC Reestablishment procedure.

As one embodiment, the first RRC procedure means an RRC Resume procedure.

As one embodiment, the first RRC procedure means a UE information procedure.

As one embodiment, the first RRC message is an RRCSetup message; and the second RRC message is an RRCSetupComplete message.

As one embodiment, the first RRC message is an RRCReconfiguration message; and the second RRC message is an RRCReconfigurationComplete message.

As one embodiment, the first RRC message is an RRCReestablishment message; and the second RRC message is an RRCReestablishmentComplete message.

As one embodiment, the first RRC message is an RRCResume message; and the second RRC message is an RRCResumeComplete message.

As one embodiment, the first RRC message is a UEInformationRequest message; and the second RRC message is a UEInformationResponse message.

As one embodiment, a name of the first RRC message comprises RRC and Setup; and a name of the second RRC message comprises RRC, Setup, and Complete.

As one embodiment, the name of the first RRC message comprises RRC and Reconfiguration; and the name of the second RRC message comprises RRC, Reconfiguration, and Complete.

As one embodiment, the name of the first RRC message comprises RRC and Reestablishment; and the name of the second RRC message comprises RRC, Reestablishment, and Complete.

As one embodiment, the name of the first RRC message comprises RRC and Resume; and the name of the second RRC message comprises RRC, Resume, and Complete.

As one embodiment, the name of the first RRC message comprises UEInformationRequest; and the name of the second RRC message comprises UEInformationResponse.

As one embodiment, the name of the first RRC message comprises Setup; and the name of the second RRC message comprises Setup and Complete.

As one embodiment, the name of the first RRC message comprises Reconfiguration; and the name of the second RRC message comprises Reconfiguration and Complete.

As one embodiment, the name of the first RRC message comprises Reestablishment; and the name of the second RRC message comprises Reestablishment and Complete.

As one embodiment, the name of the first RRC message comprises Resume; and the name of the second RRC message comprises Resume and Complete.

As one embodiment, the name of the first RRC message comprises Information and Request; and the name of the second RRC message comprises Information and Response.

As one embodiment, the first information block is an rlf-InfoAvailable field.

As one embodiment, the first information block is an rlf-InfoAvailable-r16 field.

As one embodiment, the first information block is an rlf-InfoAvailable-r19 field.

As one embodiment, the first information block comprises the rlf-InfoAvailable field.

As one embodiment, the first information block comprises the rlf-InfoAvailable-r16 field.

As one embodiment, the first information block comprises the rlf-InfoAvailable-r19 field.

As one embodiment, the first information block comprises an rlf-Report field.

As one sub-embodiment of the above embodiment, the first information block is the rlf-Report field.

As one sub-embodiment of the above embodiment, the rlf-Report field is one sub-field in the first UE variable.

As one sub-embodiment of the above embodiment, the rlf-Report field is an rlf-Report field in the first UE variable.

As one sub-embodiment of the above embodiment, a value of the rlf-Report field is the same as a value of the rlf-Report sub-field in the first UE variable.

As one embodiment, the available related information existing in the first UE variable means: the first node has available radio link failure information in the first UE variable.

As one embodiment, the available related information existing in the first UE variable means: the first node has available radio link failure or handover failure information in the first UE variable.

As one embodiment, the available related information existing in the first UE variable means: the first node has available radio link failure information in the first UE variable and a registered PLMN of the first node is comprised in a plmn-IdentityList sub-field in the first UE variable.

As one embodiment, the available related information existing in the first UE variable means: the first node has available radio link failure or handover failure information in the first UE variable and the registered PLMN of the first node is comprised in the plmn-IdentityList sub-field in the first UE variable.

As one embodiment, an action of the first information block indicating that the available related information exists in the first UE variable means: a value of the first information block explicitly indicates that the available related information exists in the first UE variable.

As one embodiment, the action of the first information block indicating that the available related information exists in the first UE variable means: the value of the first information block being true represents that the available related information exists in the first UE variable.

As one embodiment, the action of the first information block indicating that the available related information exists in the first UE variable means: the first information block existing in the second RRC message represents that the available related information exists in the first UE variable.

As one embodiment, the action of the first information block indicating that the available related information exists in the first UE variable means: the first information block in the second RRC message is the available related information in the first UE variable.

As one embodiment, the action of the first information block indicating that the available related information exists in the first UE variable means: the first information block in the second RRC message comprises the available related information in the first UE variable.

As one embodiment, the phrase of the second RRC message being used for confirming that the first RRC procedure is successfully completed means: in response to the second node successfully receiving the second RRC message, the first RRC procedure is considered to be successfully completed.

As one embodiment, the phrase of the second RRC message being used for confirming that the first RRC procedure is successfully completed means: in response to the first node completing sending the second RRC message, the first RRC procedure is considered to be successfully completed.

As one embodiment, the second information block explicitly indicates whether the information related to the radio link failure stored in the first UE variable is up-to-date.

As one sub-embodiment of the above embodiment, different values of a certain variable in the second information block represent whether the information related to the radio link failure stored in the first UE variable is up-to-date or not up-to-date.

As one sub-embodiment of the above embodiment, when a value of a certain variable in the second information block is true, it represents that the information related to the radio link failure stored in the first UE variable is up-to-date.

As one sub-embodiment of the above embodiment, when the value of a certain variable in the second information block is false, it represents that the information related to the radio link failure stored in the first UE variable is up-to-date.

As one sub-embodiment of the above embodiment, when the value of a certain variable in the second information block is 1, it represents that the information related to the radio link failure stored in the first UE variable is up-to-date.

As one sub-embodiment of the above embodiment, when the value of a certain variable in the second information block is 0, it represents that the information related to the radio link failure stored in the first UE variable is up-to-date.

As one embodiment, the second information block implicitly indicates whether the information related to the radio link failure stored in the first UE variable is up-to-date.

As one sub-embodiment of the above embodiment, when the second information block exists, it represents that the information related to the radio link failure stored in the first UE variable is up-to-date.

As one sub-embodiment of the above embodiment, when the second information block exists, it represents that the information related to the radio link failure stored in the first UE variable is not up-to-date.

As one sub-embodiment of the above embodiment, when the second information block exists, and the second information block comprises another piece of information related to the radio link failure different from the information related to the radio link failure stored in the first UE variable, it represents that the information related to the radio link failure stored in the first UE variable is not up-to-date.

As one sub-embodiment of the above embodiment, when the second information block exists, and the second information block comprises one list of the information related to the radio link failure, it represents that the information related to the radio link failure stored in the first UE variable is not up-to-date.

As one dependent embodiment of the above sub-embodiment, any element of the one list of the information related to the radio link failure is historical information related to the radio link failure in the first node.

As one dependent embodiment of the above sub-embodiment, any element of the list of the information related to the radio link failure is different from the information related to the radio link failure stored in the first UE variable.

As one dependent embodiment of the above sub-embodiment, an arrangement order of elements in the one list of the information related to the radio link failure is related to a value of a priority corresponding thereto.

As one dependent embodiment of the above sub-embodiment, elements in the one list of the information related to the radio link failure are arranged in a descending order according to values of priorities corresponding thereto.

As one dependent embodiment of the above sub-embodiment, elements in the one list of the information related to the radio link failure are arranged in an ascending order according to values of priorities corresponding thereto.

As one embodiment, the behavior of determining that the radio link failure has occurred in the first cell is that a last radio link failure occurs before the second RRC message is sent.

As one embodiment, if the information related to the radio link failure in the first cell is stored in the first UE variable, the second information block indicates that the information related to the radio link failure stored in the first UE variable is up-to-date; and if the information related to the radio link failure in the first cell is not stored in the first UE variable, the second information block indicates that the information related to the radio link failure stored in the first UE variable is not up-to-date.

### Embodiment 6

Embodiment 6 illustrates a schematic diagram of a priority of a first cell depending on a type of a radio link failure in the first cell according to one embodiment of the present application, as shown in FIG. 6.

In Embodiment 6, the priority of the first cell depends on the type of the radio link failure in the first cell.

As one embodiment, the phrase of the priority of the first cell depending on the type of the radio link failure in the first cell means: the priority of the first cell depends on whether the type of the radio link failure in the first cell is an HOF or an RLF.

As one embodiment, if the type of the radio link failure in the first cell is the RLF, the priority of the first cell is a low priority; and if the type of the radio link failure in the first cell is the HOF, the priority of the first cell is a high priority.

As one embodiment, if the type of the radio link failure in the first cell is the HOF, the priority of the first cell is a low priority; and if the type of the radio link failure in the first cell is the RLF, the priority of the first cell is a high priority.

As one embodiment, the phrase of the priority of the first cell depending on the type of the radio link failure in the first cell means: the priority of the first cell depends on a first condition set, and the first condition set depends on a radio failure type of the first cell.

As one embodiment, if the type of the radio link failure in the first cell is the RLF and a cause of the RLF (rlf-Cause) is a given cause, the priority of the first cell is a high priority.

As one sub-embodiment of the above embodiment, if the type of the radio link failure in the first cell is the HOF, the priority of the first cell is a low priority.

As one sub-embodiment of the above embodiment, if the type of the radio link failure in the first cell is the RLF and the cause of the RLF is a cause other than the given cause, the priority of the first cell is a low priority.

As one sub-embodiment of the above embodiment, when the type of the radio link failure in the first cell is the RLF and the cause of the RLF is the given cause, the priority of the first cell is lower than the priority of the first cell when the type of the radio link failure in the first cell is the RLF and the cause of the RLF is the cause other than the given cause.

As one embodiment, if the type of the radio link failure in the first cell is the RLF and the cause of the RLF is the given cause, the priority of the first cell is a low priority.

As one sub-embodiment of the above embodiment, if the type of the radio link failure in the first cell is the HOF, the priority of the first cell is a high priority.

As one sub-embodiment of the above embodiment, if the type of the radio link failure in the first cell is the RLF and the cause of the RLF is the cause other than the given cause, the priority of the first cell is a high priority.

As one sub-embodiment of the above embodiment, when the type of the radio link failure in the first cell is the RLF and the cause of the RLF is the given cause, the priority of the first cell is higher than the priority of the first cell when the type of the radio link failure in the first cell is the RLF and the cause of the RLF is the cause other than the given cause.

As one embodiment, the given cause is that T310 expires.

As one embodiment, the given cause is that a random access problem indication is received.

As one embodiment, the given cause is that the number of RLC retransmissions reaches a maximum value.

As one embodiment, the given cause is that BFR (Beam Failure Recovery) fails.

As one embodiment, the given cause is that LBT fails.

As one embodiment, the given cause is bh-rlfRecoveryFailure.

As one embodiment, the given cause is when T312 expires.

As one embodiment, the given cause is default.

As one embodiment, the given cause is predefined.

As one embodiment, the given cause is indicated by an RRC message.

As one embodiment, whether the first cell meets different condition branches in the first condition set is related to the priority of the first cell.

As one embodiment, the priority of the first cell depends on whether the first cell meets different condition branches in the first condition set.

As one embodiment, when the first cell meets different condition branches in the first condition set, the priority of the first cell is determined according to a configuration.

As one embodiment, different condition branches in the first condition set correspond to different priorities.

As one embodiment, different condition branches in the first condition set correspond to different priority weighted values.

As one embodiment, priorities corresponding to different condition branches in the first condition set are pre-configured.

As one embodiment, priorities of different condition branches in the first condition set are determined by UE.

As one embodiment, priorities of different condition branches in the first condition set are related to AI model training.

As one embodiment, priorities of different condition branches in the first condition set are related to AI model data set updating.

### Embodiment 7

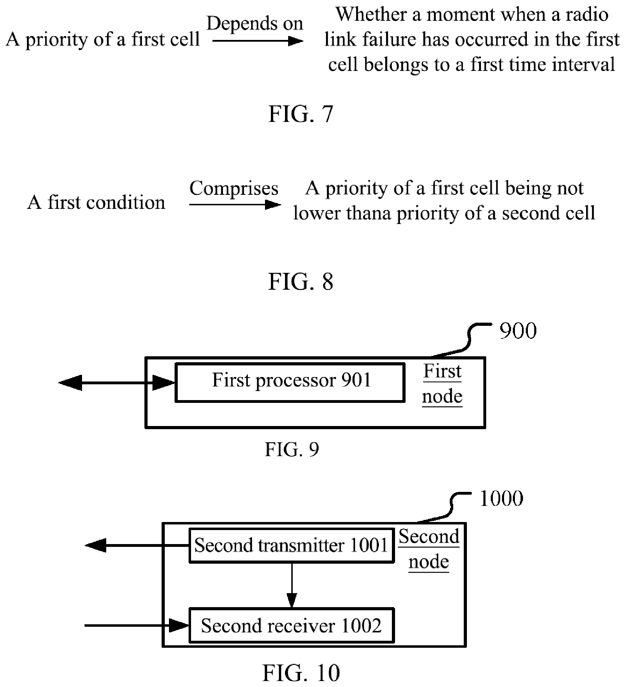

Embodiment 7 illustrates a schematic diagram of a priority of a first cell depending on whether a moment when a radio link failure has occurred in the first cell belongs to a first time interval according to one embodiment of the present application, as shown in FIG. 7.

In Embodiment 7, the priority of the first cell depends on whether the moment when the radio link failure has occurred in the first cell belongs to the first time interval.

As one embodiment, if the moment when the radio link failure has occurred in the first cell belongs to the first time interval, the priority of the first cell is a low priority; and if the moment when the radio link failure has occurred in the first cell does not belong to the first time interval, the priority of the first cell is a high priority.

As one embodiment, if the moment when the radio link failure has occurred in the first cell belongs to the first time interval, the priority of the first cell is N1; and if the moment when the radio link failure has occurred in the first cell does not belong to the first time interval, the priority of the first cell is N2.

As one sub-embodiment of the above embodiment, the N1 and the N2 are two integers.

As one sub-embodiment of the above embodiment, the N1 and the N2 are two non-negative integers.

As one sub-embodiment of the above embodiment, the N1 and the N2 are two positive integers.

As one sub-embodiment of the above embodiment, the N1 is less than the N2.

As one sub-embodiment of the above embodiment, the N1 is greater than the N2.

As one sub-embodiment of the above embodiment, the N1 is not equal to the N2.

As one sub-embodiment of the above embodiment, values of the N1 and the N2 are pre-configured.

As one sub-embodiment of the above embodiment, the values of the N1 and the N2 are default.

As one sub-embodiment of the above embodiment, the values of the N1 and the N2 are predefined.

As one sub-embodiment of the above embodiment, the values of the N1 and the N2 are pre-configured.

As one sub-embodiment of the above embodiment, the values of the N1 and the N2 are determined by UE.

As one sub-embodiment of the above embodiment, the values of the N1 and the N2 depend on an AI module.

As one sub-embodiment of the above embodiment, the values of the N1 and the N2 are indicated by the AI module.

As one embodiment, any moment in the first time interval is a moment at which one timer is running.

As one embodiment, any moment in the first time interval is a moment when the one timer does not expire (expiry).

As one embodiment, any moment in the first time interval is a moment at which the one timer is not running.

As one embodiment, a length of the one timer is pre-configured.

As one embodiment, the length of the one timer is predefined.

As one embodiment, a starting moment of the one timer is pre-configured.

As one embodiment, the starting moment of the one timer is predefined.

As one sub-embodiment of the above embodiment, the one timer is t380.

As one embodiment, a length of the first time interval is pre-configured.

As one embodiment, the length of the first time interval is default.

As one embodiment, the length of the first time interval is predefined.

As one embodiment, the length of the first time interval is determined by the UE.

As one embodiment, the length of the first time interval depends on the AI module.

As one embodiment, the length of the first time interval is indicated by the AI module.

As one embodiment, a starting moment of the first time interval is pre-configured.

As one embodiment, the starting moment of the first time interval depends on the AI module.

As one embodiment, the starting moment of the first time interval is indicated by the AI module.

As one embodiment, an ending moment of the first time interval is pre-configured.

As one embodiment, the ending moment of the first time interval depends on the AI module.

As one embodiment, the ending moment of the first time interval is indicated by the AI module.

As one embodiment, the starting moment of the first time interval depends on a moment when it is determined that the radio link failure has occurred before a behavior of determining that the radio link failure has occurred in the first cell.

As one embodiment, the starting moment of the first time interval depends on a moment when information related to the radio link failure is stored in a first UE variable before the behavior of determining that the radio link failure has occurred in the first cell.

As one embodiment, the starting moment of the first time interval is a moment when information related to the radio link failure is stored in the first UE variable before the radio link failure has occurred in the first cell.

As one embodiment, when information related to the radio link failure stored in the first UE variable is updated, the first time interval is started.

As one embodiment, when information related to the radio link failure stored in the first UE variable is updated, the one timer is restarted.

As one embodiment, when a first node detects the radio link failure, the first time interval is started.

As one embodiment, when the first node detects the radio link failure, the one timer is restarted.

### Embodiment 8

Embodiment 8 illustrates a schematic diagram of a first condition comprising a priority of a first cell being not lower than a priority of a second cell according to one embodiment of the present application, as shown in FIG. 8.

In Embodiment 8, the first condition comprises the priority of the first cell being not lower than the priority of the second cell; and when it is determined that a radio link failure has occurred in the first cell, information related to a radio link failure in the second cell is stored in a first UE variable.

As one embodiment, the being not lower than is being higher than.

As one embodiment, the being not lower than is being higher than or being equal to.

As one embodiment, the priority of the second cell means a priority of the second cell when a first node undergoes the radio link failure in the second cell.

As one embodiment, the priority of the second cell means a priority of this radio link failure when the first node undergoes the radio link failure in the second cell.

As one embodiment, the priority of the second cell means a priority of information related to this radio link failure when the first node undergoes the radio link failure in the second cell.

As one embodiment, the priority of the second cell means a priority of information related to this radio link failure stored in the first UE variable when the first node undergoes the radio link failure in the second cell.

As one embodiment, the priority of the first cell and the priority of the second cell are configured.

As one embodiment, the priority of the first cell and the priority of the second cell are obtained according to the priority calculation function.

As one embodiment, the priority of the first cell and the priority of the second cell are determined based on UE.

As one sub-embodiment of the above embodiment, the being determined based on the UE means being obtained based on an AI module.

As one embodiment, a type of the radio link failure in the second cell being an HOF and a type of a radio link failure in the first cell being an RLF are used for determining that the priority of the first cell is not lower than the priority of the second cell.

As one embodiment, the priority of the first cell being not lower than the priority of the second cell comprises: the type of the radio link failure in the second cell is the HOF and the type of the radio link failure in the first cell is the RLF.

As one embodiment, the type of the radio link failure in the second cell being the RLF and the type of the radio link failure in the first cell being the HOF are used for determining that the priority of the first cell is not lower than the priority of the second cell.

As one embodiment, the priority of the first cell being not lower than the priority of the second cell comprises: the type of the radio link failure in the second cell is the RLF and the type of the radio link failure in the first cell is the HOF.

As one embodiment, when at least the priority of the first cell is not lower than the priority of the second cell, the first condition is met.

As one embodiment, when the priority of the first cell is not lower than the priority of the second cell, the first condition is met.

As one embodiment, the priority of the first cell depends on whether a moment when the radio link failure has occurred in the first cell belongs to a first time interval; the first condition comprises the priority of the first cell being not lower than the priority of the second cell; and when it is determined that the radio link failure has occurred in the first cell, information related to the radio link failure in the second cell is stored in the first UE variable.

As one sub-embodiment of the above embodiment, if the moment when the radio link failure has occurred in the first cell belongs to the first time interval, the priority of the first cell is lower than the priority of the second cell.

As one sub-embodiment of the above embodiment, a starting moment of the first time interval depends on a moment when it is determined that the radio link failure has occurred in the second cell.

As one sub-embodiment of the above embodiment, the starting moment of the first time interval depends on a moment when the information related to the radio link failure in the second cell is stored in the first UE variable.

As one embodiment, the phrase of the information related to the radio link failure in the second cell being stored in the first UE variable means: information comprising the priority of the second cell is stored in the first UE variable.

As one embodiment, the phrase of the information related to the radio link failure in the second cell being stored in the first UE variable means: content comprising RLF report when the first node undergoes the radio link failure in the second cell is stored in the first UE variable.

As one embodiment, the phrase of the information related to the radio link failure in the second cell being stored in the first UE variable means: content comprising VarRLF-Report when the first node undergoes the radio link failure in the second cell is stored in the first UE variable.

As one embodiment, the phrase of the information related to the radio link failure in the second cell being stored in the first UE variable means: content comprising RLF-Report-r16 when the first node undergoes the radio link failure in the second cell is stored in the first UE variable.

As one embodiment, the phrase of the information related to the radio link failure in the second cell being stored in the first UE variable means: content comprising PLMN-IdentityList2-r16 when the first node experiences radio link failure on the second cell is stored in the first UE variable.

### Embodiment 9

Embodiment 9 illustrates a structural block diagram of a processing apparatus used in a first node according to one embodiment of the present application, as shown in FIG. 9. In FIG. 9, a processing apparatus 900 in the first node comprises a first processor 901.

The first processor 901 determines that a radio link failure has occurred in a first cell; and along with a behavior of determining that the radio link failure has occurred in the first cell, only when a first condition is met, stores, in a first UE variable, information related to the radio link failure in the first cell.

In Embodiment 9, the first cell is a PCell of the first node; no DAPS is configured for the first node; AS security of the first node is activated; and the first condition depends on a priority of the first cell.

As one embodiment, the priority of the first cell depends on a type of the radio link failure in the first cell.

As one embodiment, the priority of the first cell depends on whether a moment when the radio link failure has occurred in the first cell belongs to a first time interval.

As one embodiment, the first condition comprises the priority of the first cell being not lower than a priority of a second cell; and when it is determined that the radio link failure has occurred in the first cell, information related to a radio link failure in the second cell is stored in the first UE variable.

As one embodiment, the first processor receives first signaling, wherein the first signaling indicates the priority of the first cell.

As one embodiment, the first processor receives a first RRC message in a first RRC procedure; and sends a second RRC message, wherein the second RRC message comprises a first information block and a second information block, and the first information block indicates that available related information exists in the first UE variable; the second RRC message is used for confirming that the first RRC procedure is successfully completed; the second information block indicates whether the information related to the radio link failure stored in the first UE variable is up-to-date.

As one embodiment, the first processor 901 comprises a first receiver.

As one embodiment, the first processor 901 comprises a first transmitter.

As one embodiment, the first processor 901 comprises the first receiver and the first transmitter.

As one embodiment, the first receiver comprises at least one of an antenna 452 or a receiving device 454 or a multi-antenna receiving processor 458 or a receiving processor 456 or a controller/processor 459 or a memory 460 or a data source 467 in FIG. 4 of the present application.

As one embodiment, the first receiver comprises at least the antenna 452 and the receiving device 454 in FIG. 4 of the present application.

As one embodiment, the first transmitter comprises at least one of the antenna 452 or a transmitting device 454 or a multi-antenna transmitting processor 457 or a transmitting processor 468 or the controller/processor 459 or the memory 460 or the data source 467 in FIG. 4 of the present application.

As one embodiment, the first transmitter comprises at least the antenna 452 and the transmitting device 454 in FIG. 4 of the present application.

As one embodiment, the first UE variable is set by the first receiver.

As one embodiment, the first UE variable is set by the first transmitter.

As one embodiment, the first UE variable is set by the memory 460 in the first receiver.

As one embodiment, the first UE variable is set by the memory 460 in the first transmitter.

As one embodiment, the first UE variable is set by the controller/processor 459 in the first receiver.

As one embodiment, the first UE variable is set by the controller/processor 459 in the first transmitter.

As one embodiment, the first information block in the first UE variable is set by the first receiver.

As one embodiment, the first information block in the first UE variable is set by the first transmitter.

As one embodiment, the first information block in the first UE variable is set by the memory 460 in the first receiver.

As one embodiment, the first information block in the first UE variable is set by the memory 460 in the first transmitter.

As one embodiment, the first information block in the first UE variable is set by the controller/processor 459 in the first receiver.

As one embodiment, the first information block in the first UE variable is set by the controller/processor 459 in the first transmitter.

As one embodiment, the second information block in the first UE variable is set by the first receiver.

As one embodiment, the second information block in the first UE variable is set by the first transmitter.

As one embodiment, the second information block in the first UE variable is set by the memory 460 in the first receiver.

As one embodiment, the second information block in the first UE variable is set by the memory 460 in the first transmitter.

As one embodiment, the second information block in the first UE variable is set by the controller/processor 459 in the first receiver.

As one embodiment, the second information block in the first UE variable is set by the controller/processor 459 in the first transmitter.

### Embodiment 10

Embodiment 10 illustrates a structural block diagram of a processing apparatus used in a second node according to one embodiment of the present application, as shown in FIG. 10. In FIG. 10, a processing apparatus 1000 in the second node comprises a second transmitter 1001 and a second receiver 1002.

The second transmitter 1001 sends a first RRC message in a first RRC procedure; and
the second receiver 1002 receives a second RRC message, wherein the second RRC message comprises a first information block and a second information block.

In Embodiment 10, the first information block indicates that available related information exists in a first UE variable; the second RRC message is used for confirming that the first RRC procedure is successfully completed; the second information block indicates whether information related to a radio link failure stored in the first UE variable is up-to-date; a recipient of the first RRC message determines that a radio link failure has occurred in a first cell; along with the recipient of the first RRC message determining that the radio link failure has occurred in the first cell, only when a first condition is met, the recipient of the first RRC message stores, in the first UE variable, the information related to the radio link failure in the first cell; the first cell is a PCell of the recipient of the first RRC message; no DAPS is configured for the recipient of the first RRC message; AS security of the recipient of the first RRC message is activated; and the first condition depends on a priority of the first cell.

As one embodiment, the priority of the first cell depends on a type of the radio link failure in the first cell.

As one embodiment, the priority of the first cell depends on whether a moment when the radio link failure has occurred in the first cell belongs to a first time interval.

As one embodiment, the first condition comprises the priority of the first cell being not lower than a priority of a second cell; and when it is determined that the radio link failure has occurred in the first cell, information related to a radio link failure in the second cell is stored in the first UE variable.

As one embodiment, the second transmitter sends first signaling, wherein the first signaling indicates the priority of the first cell.

As one embodiment, the second transmitter 1001 comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the second transmitter 1001 comprises at least the antenna 420 and the transmitting device 418 in FIG. 4 of the present application.

As one embodiment, the second receiver 1002 comprises at least one of the antenna 420 or a receiving device 418 or a multi-antenna receiving processor 472 or a receiving processor 470 or the controller/processor 475 or the memory 476 in FIG. 4 of the present application.

As one embodiment, the second receiver 1002 comprises at least the antenna 420 and the receiving device 418 in FIG. 4 of the present application.

### Embodiment 11

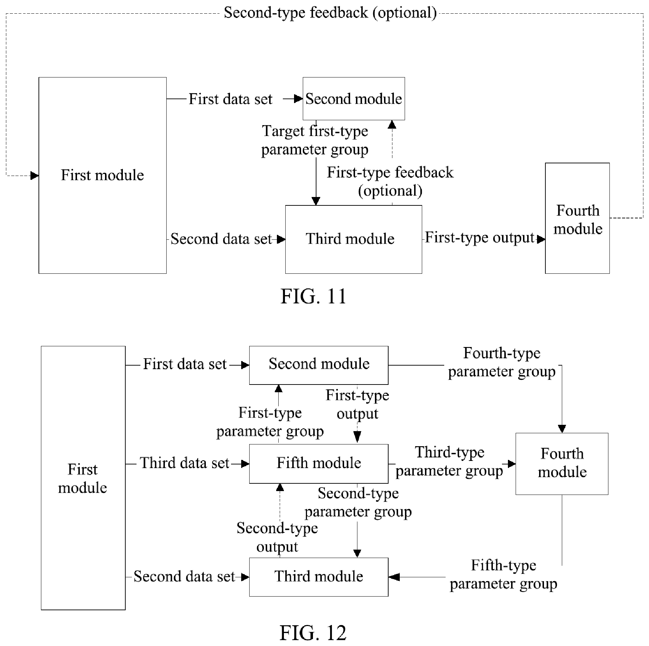

Embodiment 11 illustrates a schematic diagram of an artificial intelligence processing system according to one embodiment of the present application, as shown in FIG. 11. FIG. 11 comprises a first module, a second module, a third module, and a fourth module.

In Embodiment 11, the first module sends a first data set to the second module, the second module generates a target first-type parameter group according to the first data set, the second module sends the generated target first-type parameter group to the third module, and the third module processes a second data set using the target first-type parameter group to obtain a first-type output and then sends the first-type output to the fourth module.

As one embodiment, the first module, the second module, the third module, and the fourth module all belong to a first node.

The above method avoids air interface signaling interaction and shortens a transmission delay.

As one embodiment, the first module, the second module, the third module, and the fourth module belong to the first node and a second node.

As one embodiment, the first module belongs to the first node, and the second module, the third module, and the fourth module all belong to the second node.

The above method balances the hardware complexity and the transmission delay of the first node.

As one embodiment, the first module, the second module, the third module, and the fourth module belong to OAM to which the first node and the second node belong.

As one embodiment, the first module belongs to the first node, and the second module, the third module, and the fourth module all belong to OAM to which the second node belongs.

The above method balances hardware complexity of the first node and accuracy of the first-type output.

As one embodiment, the first module, the second module, the third module, and the fourth module all belong to OAM to which the second node belongs.

As one embodiment, the first module is used for data collection.

As one embodiment, the first module generates at least one of the first data set or the second data set according to at least a first UE variable.

As one embodiment, the first module generates at least one of the first data set or the second data set according to at least a second RRC message.

As one embodiment, the first module generates at least one of the first data set or the second data set according to at least first signaling.

As one embodiment, the first module sends the first UE variable; and the first module belongs to the first node.

As one embodiment, at least one of the first data set or the second data set is transmitted through a Uu interface.

As one embodiment, at least one of the first data set or the second data set is transmitted through an inter-module interface.

As one embodiment, at least one of the first data set or the second data set comprises the first UE variable received by the second node.

As one embodiment, at least one of the first data set or the second data set comprises the second RRC message received by the second node.

As one embodiment, at least one of the first data set or the second data set comprises the first signaling.

As one embodiment, the second module is used for model training.

As one embodiment, the first data set is training data, the second data set is inference data, the second module is used for training a model, and a trained model is described by the target first-type parameter group.

As one embodiment, the third module is used for model inference.

As one embodiment, the third module constructs a model according to the target first-type parameter group, then inputs the second data set into the constructed model to obtain the first-type output, and then sends the first-type output to the fourth module.

As one embodiment, the third module calculates an error between the first-type output and actual data to determine the performance of the trained model; and the actual data is data that is received after the second data set and that is transferred from the first module.

The above embodiments are particularly suitable for network optimization based on RLF reporting information.

The above embodiments are particularly suitable for UE to store and report an RLF message.

As one embodiment, the third module sends first-type feedback to the second module, and the first-type feedback is used for triggering recalculation or update of the target first-type parameter group.

As one embodiment, the third module recovers a reference data set according to the first-type output, and an error between the reference data set and the second data set is used for generating the first-type feedback.

As one embodiment, the first-type feedback is used for reflecting the performance of the trained model; and when the performance of the trained model cannot meet requirements, the second module recalculates the target first-type parameter group.

Typically, when the error is too large or has not been updated for too long, the performance of the trained model is considered to be unable to meet the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends second-type feedback to the first module, the second-type feedback is used for generating the first data set or the second data set, or the second-type feedback is used for triggering sending of the first data set or the second data set.

As one embodiment, the fourth module sends the second-type feedback to the first module, and the second-type feedback is used for triggering execution of the first-type output.

As one embodiment, the first-type output comprises the first signaling.

As one embodiment, the first-type output comprises a priority of a first cell.

As one embodiment, the first-type output comprises a priority of a cell in which UE is located when an RLF occurs.

As one embodiment, the first-type output comprises the first UE variable.

As one embodiment, the first-type output comprises a first information block in the first UE variable.

As one embodiment, the first-type output comprises a second information block in the first UE variable.

As one embodiment, the first-type output comprises the second RRC message.

As one embodiment, the first-type output comprises other possible network optimization parameters.

As one embodiment, Embodiment 11 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 11.

### Embodiment 12

Embodiment 12 illustrates a schematic diagram of an artificial intelligence processing system according to another embodiment of the present application, as shown in FIG. 12. FIG. 12 comprises a first module, a second module, a third module, a fourth module, and a fifth module.

In Embodiment 12, the first module sends a first data set to the second module, the first module sends a second data set to the third module, the first module sends a third data set to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module, and the fifth module all belong to a first node.

The above method avoids air interface signaling interaction and shortens a transmission delay.

As one embodiment, any one of the first module, the second module, the third module, the fourth module, and the fifth module does not belong to the first node.

The above method reduces hardware complexity of the first node.

As one embodiment, at least the first module of the first module, the second module, the third module, the fourth module, and the fifth module belongs to the first node; and at least one of the first module, the second module, the third module, the fourth module, and the fifth module does not belong to the first node.

The above method balances the hardware complexity and the transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing a trained model.

As one embodiment, the fourth module is responsible for storing a trained model that can be used for executing inference processing.

As one embodiment, the fifth module is used for management.

As one embodiment, the fifth module is responsible for management.

As one embodiment, the fifth module has a management function.

As one embodiment, the first data set is training data.

As one embodiment, the second data set is inference data.

As one embodiment, the third data set is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a model.

As one embodiment, the second-type parameter group is used for selecting a model.

As one embodiment, the second-type parameter group is used for switching a model.

As one embodiment, the second-type parameter group is used for activating/deactivating a model.

As one embodiment, the second-type parameter group is used for falling back from an AI-ML operation to a non-AI-ML operation.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates an identifier of a model.

As one embodiment, the fifth-type parameter group comprises model transfer.

As one embodiment, the fifth-type parameter group comprises model delivery.

As one embodiment, the fifth-type parameter group indicates an identifier of a model.

As one embodiment, a first-type output comprises a monitoring output.

As one embodiment, the first-type output exists.

As one embodiment, the first-type output does not exist.

As one embodiment, a second-type output comprises an inference output.

As one embodiment, the second-type output is used by the fifth module for monitoring performance of an AI/ML model.

As one embodiment, the second-type output is used by the fifth module for monitoring performance of an AI/ML function.

As one embodiment, the second-type output exists.

As one embodiment, the second-type output does not exist.

As one embodiment, the artificial intelligence processing system generates or assists in generating at least one of first signaling or a priority of a first cell or a priority of a cell in which UE is located when an RLF occurs or a first UE variable or a first information block in the first UE variable or a second information block in the first UE variable or a second RRC message or other possible network optimization parameters.

As one embodiment, the fifth module generates or assists in generating at least one of the first signaling or the priority of the first cell or the priority of the cell in which the UE is located when the RLF occurs or the first UE variable or the first information block in the first UE variable or the second information block in the first UE variable or the second RRC message or other possible network optimization parameters.

As one embodiment, the third module generates or assists in generating at least one of the first signaling or the priority of the first cell or the priority of the cell in which the UE is located when the RLF occurs or the first UE variable or the first information block in the first UE variable or the second information block in the first UE variable or the second RRC message or other possible network optimization parameters.

As one embodiment, the second-type output comprises at least one of the first signaling or the priority of the first cell or the priority of the cell in which the UE is located when the RLF occurs or the first UE variable or the first information block in the first UE variable or the second information block in the first UE variable or the second RRC message or other possible network optimization parameters.

As one embodiment, at least one of the first data set or the second data set comprises the first UE variable received by a second node.

As one embodiment, at least one of the first data set or the second data set comprises the second RRC message received by the second node.

As one embodiment, at least one of the first data set or the second data set comprises the first signaling.

As one embodiment, at least one of the first data set or the second data set or the third data set comprises the first UE variable.

As one embodiment, at least one of the first data set or the second data set or the third data set comprises the second RRC message.

As one embodiment, at least one of the first data set or the second data set or the third data set comprises the first signaling.

As one embodiment, Embodiment 13 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 12.

Those of ordinary skill in the art can understand that all or part of the steps in the above method can be completed by instructing relevant hardware through a program, and the program can be stored in a computer-readable storage medium, such as a read-only memory, a hard disk or an optical disk. Optionally, all or part of the steps in the above embodiments can also be implemented using one or more integrated circuits. Accordingly, each module unit in the above embodiments can be implemented in the form of hardware or in the form of a software function module. The present application is not limited to any specific form of software and hardware combination. The user equipment, terminals and UE in the present application include but are not limited to drones, communication modules on the drones, remote-controlled airplanes, aircrafts, small airplanes, mobile phones, tablet computers, notebook computers, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers, and other wireless communication devices.The base station or system device in the present application includes but is not limited to macro cellular base stations, micro cellular base stations, Femtocells, relay base stations, gNBs (NR nodes B), TRPs (Transmitter Receiver Points), and other wireless communication devices.

The above are only preferred embodiments of the present application and is not intended to limit the scope of protection of the present application. Any modifications, equivalent substitutions, improvements and the like made within the spirit and principles of the present application shall be comprised within the scope of protection of the present application.

## Claims

1. A first node used for wireless communication, comprising:
a first processor determining that a radio link failure has occurred in a first cell; and along with a behavior of determining that the radio link failure has occurred in the first cell, only when a first condition is met, storing, in a first UE variable, information related to the radio link failure in the first cell,
wherein the first cell is a PCell of the first node; no DAPS is configured for the first node; AS security of the first node is activated; and the first condition depends on a priority of the first cell.

2. The first node according to claim 1, wherein the priority of the first cell depends on a type of the radio link failure in the first cell.

3. The first node according to claim 1 or 2, wherein the priority of the first cell depends on whether a moment at which the radio link failure has occurred in the first cell belongs to a first time interval.

4. The first node according to any one of claims 1 to 3, wherein the first condition comprises the priority of the first cell being not lower than a priority of a second cell; and when it is determined that the radio link failure has occurred in the first cell, information related to a radio link failure in the second cell is stored in the first UE variable.

5. The first node according to any one of claims 1 to 4, comprising:
the first processor receiving first signaling, wherein the first signaling indicates the priority of the first cell.

6. The first node according to any one of claims 1 to 5, comprising:
the first processor receiving a first RRC message in a first RRC procedure; and sending a second RRC message, the second RRC message comprising a first information block and a second information block, and the first information block indicating that available related information exists in the first UE variable,
wherein the second RRC message is used for confirming that the first RRC procedure is successfully completed; and the second information block indicates whether information related to the radio link failure stored in the first UE variable is up-to-date.

7. A second node used for wireless communication, comprising:
a second transmitter sending a first RRC message in a first RRC procedure; and
a second receiver receiving a second RRC message, the second RRC message comprising a first information block and a second information block,
wherein the first information block indicates that available related information exists in a first UE variable; the second RRC message is used for confirming that the first RRC procedure is successfully completed; the second information block indicates whether information related to a radio link failure stored in the first UE variable is up-to-date; a recipient of the first RRC message determines that the radio link failure has occurred in a first cell; along with the recipient of the first RRC message determining that the radio link failure has occurred in the first cell, only when a first condition is met, the recipient of the first RRC message stores, in the first UE variable, information related to the radio link failure in the first cell; the first cell is a PCell of the recipient of the first RRC message; no DAPS is configured for the recipient of the first RRC message; AS security of the recipient of the first RRC message is activated; and the first condition depends on a priority of the first cell.

8. A method for a first node used for wireless communication, comprising:
determining that a radio link failure has occurred in a first cell; and along with a behavior of determining that the radio link failure has occurred in the first cell, only when a first condition is met, storing, in a first UE variable, information related to the radio link failure in the first cell,
wherein the first cell is a PCell of the first node; no DAPS is configured for the first node; AS security of the first node is activated; and the first condition depends on a priority of the first cell.

9. A method for a second node used for wireless communication, comprising:
sending a first RRC message in a first RRC procedure; and
receiving a second RRC message, wherein the second RRC message comprises a first information block and a second information block,
wherein the first information block indicates that available related information exists in a first UE variable; the second RRC message is used for confirming that the first RRC procedure is successfully completed; the second information block indicates whether information related to a radio link failure stored in the first UE variable is up-to-date; a recipient of the first RRC message determines that the radio link failure has occurred in a first cell; along with the recipient of the first RRC message determining that the radio link failure has occurred in the first cell, only when a first condition is met, the recipient of the first RRC message stores, in the first UE variable, information related to the radio link failure in the first cell; the first cell is a PCell of the recipient of the first RRC message; no DAPS is configured for the recipient of the first RRC message; AS security of the recipient of the first RRC message is activated; and the first condition depends on a priority of the first cell.
